# EUROPEAN PATENT APPLICATION

(11) **EP 4 733 203 A1**
(43) Date of publication of application: **29.04.2026**
(21) Application number: 24830514.6
(22) Date of filing: 14.06.2024
(51) Int. Cl.: B64U 30/29, B64U 20/80, B64C 3/00

(54) **AIRCRAFT AND MULTI-ROTOR FLIGHT PLATFORM THEREFOR**

(30) Priority: 25.06.2023 CN 202310752438
(71) Applicant: Autoflight (Kunshan) Co., Ltd., Suzhou, Jiangsu 215345 (CN)
(72) Inventor: TIAN, Yu, Suzhou, Jiangsu 215345 (CN); CUI, Yongqiang, Suzhou, Jiangsu 215345 (CN)
(74) Representative: MERH-IP Matias Erny Reichl Hoffmann Patentanwälte PartG mbB
(86) International application number: PCT/CN2024/099120
(87) International publication number: WO 2025/001868

(57) **Abstract**

The invention relates to the field of aircraft, and discloses an aircraft and its multi-rotor aerial platform. The multi-rotor aerial platform of the present invention comprises at least one pair of rotor arms, which are symmetrically arranged about a central axis and each of which is provided with a plurality of vertical take-off and landing (VTOL) power units; a main wing, which is symmetrically arranged about the central axis and connected to the at least one pair of rotor arms; and a canard and a central avionics bay, which are respectively structurally integrated with a pair of rotor arms closest to the central axis and form a monolithic closed-loop structure with this pair of rotor arms. By forming the canard, the rotor arms, and the central avionics bay into a monolithic closed-loop structure, the present disclosure significantly enhances the structural rigidity of the motor installation on the rotor arms.

## Description

### FIELD OF THE DISCLOSURE

The invention relates to the technical field of aircraft, and particularly to an aircraft and its multi-rotor aerial platform.

### BACKGROUND OF THE INVENTION

Currently, the main structure of Unmanned Aerial Vehicles (UAVs) is assembled using components such as the canard, rotor arms, and a central avionics bay. The assembly process requires a substantial number of fastening devices, which not only increases the weight of the aircraft but also necessitates regular maintenance and inspection for signs of loosening. Failure to do so can easily lead to safety incidents.

### SUMMARY OF THE INVENTION

The purpose of the present invention is to provide an aircraft and its multi-rotor aerial platform, wherein the multi-rotor aerial platform significantly enhances the structural rigidity of the motor installation on the inner rotor arms by forming the canard, the rotor arms, and the central avionics bay into a monolithic closed-loop structure.

To solve the above technical problem, the present invention provides a multi-rotor aerial platform comprising: at least one pair of rotor arms, wherein the at least one pair of rotor arms is arranged symmetrically about a central axis, and each rotor arm is provided with a plurality of vertical take-off and landing (VTOL) power units;
a main wing, wherein the main wing is arranged symmetrically about the central axis and is connected to the at least one pair of rotor arms; a canard and a central avionics bay, wherein the canard and the central avionics bay are respectively structurally integrated with a pair of rotor arms closest to the central axis and form a monolithic closed-loop structure with this pair of rotor arms.

Further, the present invention provides an aircraft, comprising the multi-rotor aerial platform and a fuselage, wherein the fuselage is connected to a bottom of the multi-rotor aerial platform.

Preferably, a cross-sectional shape of the rotor arm is streamlined, and a thickness of the arm is 1.5 times or more its width.

Preferably, the pair of rotor arms closest to the central axis comprises an inner left rotor arm and an inner right rotor arm, wherein the inner left rotor arm comprises a first left arm portion and a second left arm portion, and the inner right rotor arm comprises a first right arm portion and a second right arm portion, and the canard and the central avionics bay form the monolithic closed-loop structure with the first left arm portion and the first right arm portion.

Preferably, the first left arm portion is provided with at least one pair of the VTOL power units, and the first right arm portion is provided with at least one pair of the VTOL power units.

Preferably, the at least one pair of rotor arms comprises an inner pair of rotor arms and an outer pair of rotor arms, wherein the inner pair of rotor arms is closer to the central axis, the outer pair of rotor arms is farther away from the central axis, and a distance between the outer rotor arm and the inner rotor arm is at least greater than the sum of a rotation radius of a lift propeller of the VTOL power unit installed on the inner rotor arm, the rotation radius of the lift propeller installed on the outer rotor arm, and a convection gap, wherein the convection gap is 8% to 15% of a maximum of a lift propeller diameter on the outer rotor arm and the inner rotor arm.

Preferably, each rotor arm is provided with an installation notch, and the main wing is provided with a wing connection portion corresponding to and connected to an edge of each of the installation notches.

Preferably, a level flight power unit is provided at a tail of the pair of rotor arms closer to the central axis.

Preferably, the canard further comprises a pair of canard extension portions, wherein the canard extension portions respectively pass out of the pair of rotor arms and form a gradually tapering streamlined structure in a direction away from the canard.

Preferably, a distance between the central avionics bay and the canard measures half the length of the rotor arm closer to the central axis.

The multi-rotor aerial platform of the present disclosure forms a monolithic closed-loop structure with the canard, the rotor arms, and the central avionics bay. This closed-loop structure significantly enhances the structural rigidity of the motor installations on the closed-loop structure.

### BRIEF DESCRIPTION OF DRAWINGS

FIG. 1 shows a schematic structural view of a multi-rotor aerial platform according to an embodiment of the present invention;
FIG. 2 shows a perspective view of an A-shaped structure of the multi-rotor aerial platform according to an embodiment of the present invention;
FIG. 3 shows a top view of the A-shaped structure of the multi-rotor aerial platform according to an embodiment of the present invention;
FIG. 4 shows a cross-sectional view of an arm of the multi-rotor aerial platform according to an embodiment of the present invention.

### DETAILED DESCRIPTION

The following embodiments further illustrate the technical solutions of the present invention. It can be understood that the specific embodiments described herein are only used to explain the present invention. Additionally, it should be noted that, for ease of description, the drawings only show parts related to the present invention and not all parts.

In the description of the present invention, unless otherwise specified, terms such as "install", "connect", and "attach" should be interpreted broadly. For example, connections may be fixed or detachable, mechanical or electrical, direct or indirect via intermediate components, or internal connections between two elements. Those skilled in the art can understand the specific meanings of these terms in the present invention based on the context.

In the present invention, unless otherwise specified and defined, the first feature being "on" or "under" the second feature may include the first and second features being in direct contact, or may include the first and second features not being in direct contact but being in contact through additional features between them. Moreover, the first feature being "on", "above", or "over" the second feature includes the first feature being directly above or obliquely above the second feature, or merely indicates that the horizontal height of the first feature is higher than that of the second feature. The first feature being "under", "below", or "beneath" the second feature includes the first feature being directly below or obliquely below the second feature, or merely indicates that the horizontal height of the first feature is lower than that of the second feature.

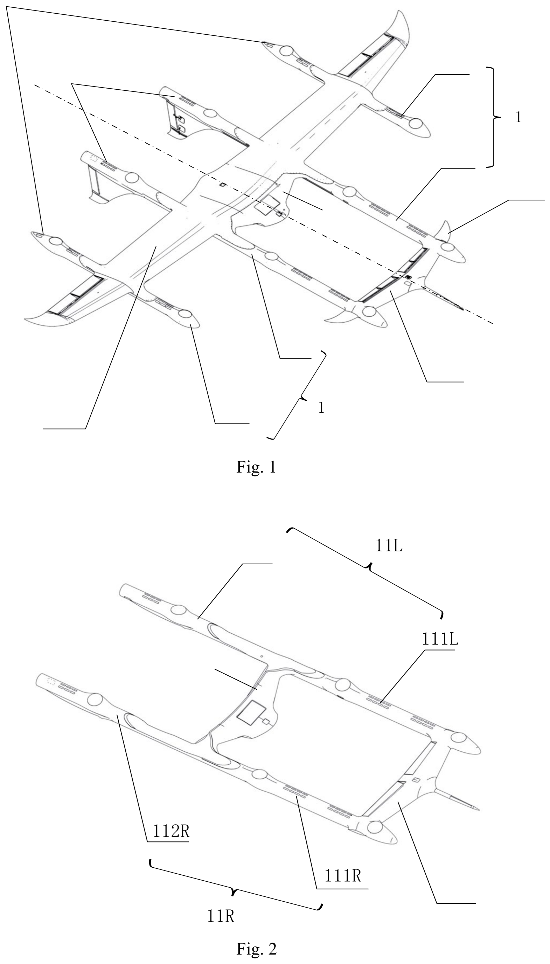

The embodiments of this disclosure are described below with reference to the drawings. As shown in Figures 1 to 3, the multi-rotor aerial platform of an embodiment of this invention comprises: two pairs of rotor arms 1, a main wing 2, a canard 3, and a central avionics bay 4. The two pairs of rotor arms 1 are symmetrically arranged about a central axis S, and each rotor arm 1 is provided with a plurality of vertical take-off and landing (VTOL) power units 5. The main wing 2 is symmetrically arranged about the central axis S and serially connected to the two pairs of rotor arms 1. The canard 3 and the central avionics bay 4 are respectively connected to a pair of rotor arms 1 closer to the central axis S and form a monolithic closed-loop structure with this pair of rotor arms 1.

Specifically, the two pairs of rotor arms 1 include an inner pair of rotor arms 11 and an outer pair of rotor arms 12. The inner pair of rotor arms 11 is closer to the central axis S, and the outer pair of rotor arms 12 is farther away from the central axis S. As seen in Figure 1, the outer pair of rotor arms 12 is arranged on both sides of the inner pair of rotor arms 11. The inner pair of rotor arms 11 includes an inner left rotor arm 11L and an inner right rotor arm 11R, and the outer pair of rotor arms 12 includes an outer left rotor arm 12L and an outer right rotor arm 12R. As shown in Figure 2, the inner left rotor arm 11L comprises a first left arm portion 111L and a second left arm portion 112L, and the inner right rotor arm 11R comprises a first right arm portion 111R and a second right arm portion 112R. Each rotor arm 1 is provided with an installation notch, and the main wing 2 is provided with a wing connection portion that correspondingly connects to the corresponding edge of each installation notch, thereby connecting the main wing 2 to the two pairs of rotor arms 1. Consequently, the second left arm portion 112L and the second right arm portion 112R behind the main wing 2 are shortened, which in turn shortens the lever arm of the rear motor, reducing the pitching moment while enhancing the installation rigidity. The canard 3 and the central avionics bay 4 jointly form the monolithic closed-loop structure with the first left arm portion 111L and the first right arm portion 111R, which results in a significant increase in the strength of the main structure, thereby noticeably enhancing the structural rigidity of the motor installations on the rotor arms. Furthermore, the distance between the outer rotor arm and the inner rotor arm is at least greater than the sum of the rotation radius of the lift propeller of the VTOL power unit installed on the inner rotor arm, the rotation radius of the lift propeller installed on the outer rotor arm, and a convection gap, where the convection gap is 8% to 15% of the maximum of the lift propeller diameter on the outer rotor arm and the inner rotor arm. This configuration achieves a balance point between structural strength and aerodynamic efficiency, simultaneously satisfying the requirements for both.

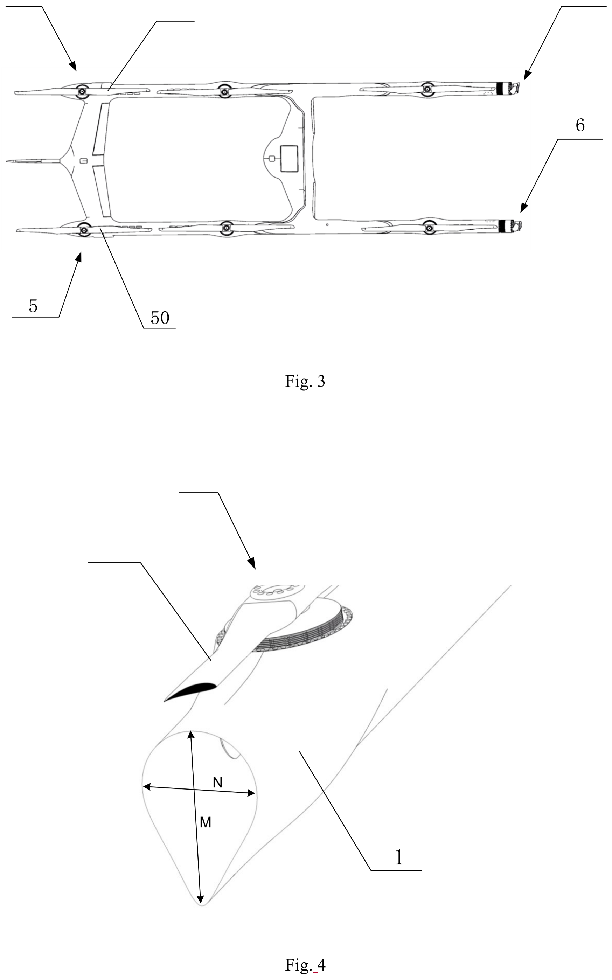

As shown in Figure 3, the first left arm portion 111L is provided with a pair of the vertical take-off and landing (VTOL) power units 5, and the first right arm portion 111R is provided with a pair of the VTOL power units 5. The VTOL power unit 5 is specifically a lift motor. Furthermore, a level flight power unit 6 is provided at the tail of the inner rotor arm (11), which is specifically a thrust motor.

As shown in Figure 4, the VTOL power unit 5 comprises a propeller 50. The cross-sectional shape of the rotor arm 1 opposite the propeller 50 is streamlined, preferably exhibiting a gradually tapering teardrop shape from top to bottom. Moreover, the thickness M of the rotor arm 1 is 1.5 times or more its width N. This teardrop-shaped streamlined configuration reduces the formation of vortices caused by the interference of the propeller's downwash with the aircraft's airframe, thereby minimizing the power loss of the lift motors and increasing their efficiency.

Furthermore, the center of gravity (CG) of the central avionics bay 4 coincides with the CG of the multi-rotor aerial platform. This reduces the computational workload of the flight control (FC) system, which is beneficial for the FC system to control the aircraft's attitude and reduces the computational demands on the flight control system, thereby further reducing the computational workload of the flight control system.

Furthermore, as shown in Figure 1, the canard 3 further comprises a pair of canard extension portions 30. The canard extension portions 30 respectively pass through the pair of inner rotor arms 11 and form a gradually tapering streamlined structure in the direction away from the canard 3. Specifically, the canard extension portion 30 is located on the side of the inner left rotor arm 11L opposite the canard 3, and on the side of the inner right rotor arm 11R opposite the canard 3. This pair of canard extension portions 30 exhibits a structure that gradually tapers away from the canard direction. The canard extension portion 30 can increase the lift of the aircraft in the fixed-wing flight state and facilitates aircraft trimming. Trimming refers to the fine-tuning of control surfaces (such as ailerons, elevators, rudders, etc.) to achieve the goal of stabilizing the aircraft's attitude and heading, avoiding pitching moments, and thus avoiding the need to compensate for these pitching moments, which would otherwise affect flight efficiency.

The present disclosure provides an aircraft, which comprises the multi-rotor aerial platform described above, as well as a fuselage. The fuselage is connected to the bottom of the multi-rotor aerial platform. The multi-rotor aerial platform of the aircraft in the present disclosure significantly enhances the structural rigidity of the motor installations on the rotor arms by forming the canard, the rotor arms, and the central avionics bay into the monolithic closed-loop structure.

The above embodiments are only illustrative of the principles and effects of the present invention. Anyone skilled in the art may modify or change the above embodiments without departing from the purpose of the present invention. Therefore, all equivalent modifications or changes made by those skilled in the art without departing from the disclosed purpose of the present invention shall fall within the scope of the claims of the present invention.

## Claims

1. A multi-rotor aerial platform, comprising:
at least one pair of rotor arms (1), wherein the at least one pair of rotor arms (1) is arranged symmetrically about a central axis (S), and each rotor arm (1) is provided with a plurality of vertical take-off and landing (VTOL) power units (5); a
main wing (2), wherein the main wing (2) is arranged symmetrically about the central axis (S) and is connected to the at least one pair of rotor arms (1);
a canard (3) and a central avionics bay (4), wherein the canard (3) and the central avionics bay (4) are respectively structurally integrated with a pair of rotor arms (1) closest to the central axis (S) and form a monolithic closed-loop structure with this pair of rotor arms (1).

2. The multi-rotor aerial platform according to claim 1, wherein a cross-sectional shape of the rotor arm (1) is streamlined, and a thickness of the arm (1) is 1.5 times or more its width.

3. The multi-rotor aerial platform according to claim 1, wherein the pair of rotor arms (1) closest to the central axis (S) comprises an inner left rotor arm (11L) and an inner right rotor arm (11R), wherein the inner left rotor arm (11L) comprises a first left arm portion (111L) and a second left arm portion (112L), and the inner right rotor arm (11R) comprises a first right arm portion (111R) and a second right arm portion (112R), and the canard (3) and the central avionics bay (4) form the monolithic closed-loop structure with the first left arm portion (111L) and the first right arm portion (111R).

4. The multi-rotor aerial platform according to claim 3, wherein the first left arm portion (111L) is provided with at least one pair of the VTOL power units (5), and the first right arm portion (111R) is provided with at least one pair of the VTOL power units (5).

5. The multi-rotor aerial platform according to claim 1, wherein the at least one pair of rotor arms (1) comprises an inner pair of rotor arms (11) and an outer pair of rotor arms (12), wherein the inner pair of rotor arms (11) is closer to the central axis (S), the outer pair of rotor arms (12) is farther away from the central axis (S), and a distance between the outer rotor arm and the inner rotor arm is at least greater than the sum of a rotation radius of a lift propeller (50) of the VTOL power unit (5) installed on the inner rotor arm, the rotation radius of the lift propeller (50) installed on the outer rotor arm, and a convection gap, wherein the convection gap is 8% to 15% of a maximum of a lift propeller diameter on the outer rotor arm and the inner rotor arm.

6. The multi-rotor aerial platform according to claim 1, wherein each rotor arm (1) is provided with an installation notch, and the main wing (2) is provided with a wing connection portion corresponding to and connected to an edge of each of the installation notches.

7. The multi-rotor aerial platform according to claim 1, wherein a level flight power unit (6) is provided at a tail of the pair of rotor arms (1) closest to the central axis (S).

8. The multi-rotor aerial platform according to claim 1, wherein the canard (3) further comprises a pair of canard extension portions (30), wherein the canard extension portions (30) respectively pass out of the pair of rotor arms (1) and form a gradually tapering streamlined structure in a direction away from the canard (3).

9. The multi-rotor aerial platform according to claim 5, wherein a distance between the central avionics bay (4) and the canard (3) measures half the length of the rotor arm (11) closer to the central axis (S).

10. An aircraft, comprising the multi-rotor aerial platform according to any one of the claims 1 to 9, and a fuselage, wherein the fuselage is connected to a bottom of the multi-rotor aerial platform.
